# EUROPÄISCHE PATENTSCHRIFT

(11) **EP 1 068 998 B1**
(45) Veröffentlichungstag und Bekanntmachung des Hinweises auf die Patenterteilung: **14.07.2004**
(21) Anmeldenummer: 00111161.6
(22) Anmeldetag: 24.05.2000
(51) Int. Cl.: B60R 16/02, H01M 8/04, H02J 7/14, B60L 11/18

(54) **Verfahren und Schaltungsanordnung zur Versorgung eines Bordnetzes eines Kraftfahrzeugs mit elektrischer Energie**
Procedure and circuit for supplying a vehicle onboard network with electric energy
Procédé et circuit pour alimenter un réseau de bord d'un véhicule avec de l'énergie électrique

(30) Priorität: 14.07.1999 DE 19932781
(43) Veröffentlichungstag der Anmeldung: 17.01.2001
(73) Patentinhaber: DaimlerChrysler AG, 70567 Stuttgart (DE)
(72) Erfinder: Schell, Andreas, 70619 Stuttgart (DE)

(56) Entgegenhaltungen:
- DE-A- 19 523 109
- DE-A- 19 703 171
- US-A- 5 780 980
- PATENT ABSTRACTS OF JAPAN vol. 1998, no. 01, 30. Januar 1998 (1998-01-30) & JP 09 231991 A (TOYOTA MOTOR CORP), 5. September 1997 (1997-09-05)
- PATENT ABSTRACTS OF JAPAN vol. 1999, no. 01, 29. Januar 1999 (1999-01-29) & JP 10 271706 A (TOYOTA MOTOR CORP), 9. Oktober 1998 (1998-10-09)

## Beschreibung

Die vorliegende Erfindung betrifft ein Verfahren zur Versorgung eines Bordnetzes eines Kraftfahrzeugs mit elektrischer Energie nach dem Oberbegriff des Patentanspruchs 1.

Aus der DE 197 03 171 A1 ist ein Fahrzeug mit einem Antriebs-Verbrennungsmotor und einer diesem zugeordneten Energiequelle sowie mit elektrischen Verbrauchern, die durch eine Stromerzeugungseinrichtung mit elektrischer Energie versorgt werden, bekannt, wobei die Stromerzeugungseinrichtung ein Brennstoffzellenaggregat ist, das unabhängig vom Betrieb des Verbrennungsmotors aktivierbar ist. Parallel zu den mittels des Brennstoffzellenaggregats beaufschlagbaren Verbrauchern ist eine Pufferbatterie zur Abdeckung kurzzeitiger Bedarfsspitzen, wie sie beispielsweise beim Anlassen des Verbrennungsmotors auftreten, vorgesehen.

Aus der DE 195 23 109 ist ein mittels einer Brennkraftmaschine angetriebenes Kraftfahrzeug bekannt, welches zur Erzeugung von elektrischer Energie zum Betreiben von elektrischen Verbrauchern anstelle einer Lichtmaschine ein Brennstoffzellensystem aufweist. Die elektrische Energie zum Starten des Brennstoffzellensystems bzw. einer diesem zugeordneten Spaltanlage wird mittels einer Batterie bereitgestellt. Es ist hierbei vorgesehen, eine Anpassung der von den Brennstoffzellen gelieferten Ausgangsspannung zur bedarfsgerechten Versorgung der Verbraucher mit elektrischer Energie mittels eines Spannungsreglers durchzuführen. Das Vorsehen eines derartigen Spannungsreglers zwischen dem Brennstoffzellensystem und dem Bordnetz erweist sich als relativ aufwendig.

Aus der Patentschrift US 5,780,980 A sind ein Antriebssystem für ein Elektrofahrzeug und ein Verfahren zum Betreiben dieses Antriebssystems bekannt, wobei ein elektrischer Motor über einen Stromrichter mit elektrischer Energie versorgt wird. Die Energieversorgung erfolgt mittels einer Batterie und einem parallel zur Batterie angeordneten Brennstoffzellenaggregat. Ebenfalls parallel zur Batterie bzw. zum Brennstoffzellenaggregat geschaltet sind elektrische Verbraucher wie beispielsweise ein Motor für eine Klimaanlage und ein Motor für eine Servolenkung. Die Batterie wird durch das Brennstoffzellenaggregat aufgeladen, wenn die Ladung der Batterie unter einen bestimmten Wert sinkt. Das Aufladen der Batterie wird unterbrochen, wenn die Ladung gleich oder größer als ein weiterer vorbestimmter Wert ist.

Aufgabe der Erfindung ist die Angabe eines Verfahrens, mit welchem eine Versorgung eines Bordnetzes bei Verwendung eines Brennstoffzellensystems zur Stromerzeugung in besonders einfacher Weise möglich ist.

Diese Aufgabe wird gelöst durch ein Verfahren mit den Merkmalen des Patentanspruchs 1.

Erfindungsgemäß kann auf eine Leistungselektronik zur Spannungsanpassung zwischen dem Brennstoffzellensystem und dem Bordnetz verzichtet werden. Dadurch, daß eine elektrische Wechselwirkung zwischen den einzelnen Komponenten zur Stromerzeugung für ein Bordnetz vorgesehen ist, erhält man einen höheren Wirkungsgrad des Gesamtsystems. Ferner ist das Gesamtsystem gegenüber herkömmlichen Lösungen kostengünstiger bereitstellbar. Erfindungsgemäß ist eine unaufwendige und hierbei optimale Anpassung des Brennstoffzellensystems an eine veränderliche Stromanforderung seitens des Bordnetzes zur Verfügung gestellt. Eine Aufladung der Batterie mittels des Brennstoffzellenaggregats kann gleichzeitig mit oder unabhängig von einer Versorgung des Bordnetzes mit Energie durchgeführt werden. Mittels des erfindungsgemäßen Verfahrens ist es möglich, das Brennstoffzellenaggregat stets bei Nennleistung zu betreiben, da ein erzeugter Strom wahlweise auf die Batterie und/oder einen Verbraucher abgebbar ist.

Das Brennstoffzellen-Aggregat wird bei Unterschreiten einer voreinstellbaren Batterie-Spannungsgrenze zum Aufladen der Batterie und gegebenenfalls zur wenigstens teilweisen Versorgung des Bordnetzes mit elektrischer Energie aktiviert. Mit dieser Maßnahme ist eine optimale Ausnutzung der durch die jeweiligen Stromversorgungskomponenten zur Verfügung gestellten Energie Energie gewährleistet. Diese Maßnahme ist insbesondere bei ausgeschaltetem Fahrzeugmotor vorteilhaft einsetzbar.

Ferner wird das Brennstoffzellenaggregat bei Überschreiten einer voreinstellbaren Bordnetz-Last aktiviert. Durch diese Maßnahme ist es beispielsweise möglich, eine Batterie und einen gegebenenfalls vorhandenen Generator gegenüber herkömmlichen Lösungen relativ klein zu dimensionieren, da bei Überschreiten einer vorgegebenen Bordnetz-Last das Brennstoffzellenaggregat die Last bis hin zu einer maximal möglichen Leistungsabgabe übernehmen kann. Weiterhin wird das Brennstoffzellenaggregat bei Überschreiten einer voreinstellbaren Batteriespannungsgrenze deaktiviert. Durch diese Maßnahme ist es möglich, die Batterie vor Überladungsschäden zu schützen.

Eine Ausführungsform einer für das erfindungsgemäße Verfahren geeigneten Schaltungsanordnung weist eine zwischen die Batterie und das Brennstoffzellenaggregat geschaltete Diode auf. Hiermit ist in einfacher Weise ein Stromfluß in nur einer Richtung zwischen dem Brennstoffzellenaggregat und der Batterie bzw. dem Bordnetz gewährleistet.

Vorteilhafte Ausgestaltungen des erfindungsgemäßen Verfahrens sind Gegenstand der Unteransprüche und der Beschreibung.

Die Erfindung wird nun anhand der beigefügten Zeichnung weiter beschrieben. In dieser zeigt
- Fig. 1: eine bevorzugte Ausführungsform einer Schaltungsanordnung, und
- Fig. 2: eine Strom-Spannungs-Kennlinie einer Brennstoffzelle bei einem Einsatz zur Ladung einer Batterie.

Es sei davon ausgegangen, daß für den nun beschriebenen Fall eine mit 1 bezeichnete Brennstoffzelle motorunabhängig aktiv sein soll, d. h. der Motor des Fahrzeugs ist nicht eingeschaltet, und der Fahrer schaltet in diesem Zustand einen beliebigen Verbraucher (hier mit 2 bezeichnet) ein. Man erkennt, daß parallel zu dem Brennstoffzellenaggregat 1 eine Kraftfahrzeugbatterie 3 und ein Generator 4 geschaltet sind. Im beschriebenen Zustand (abgestellter Motor) wird der Generator 4 nicht eingesetzt, weil er üblicherweise durch den Motor mechanisch angetrieben wird. Ein entsprechendes Betriebsverhalten ergibt sich auch, wenn gar kein Generator vorhanden ist.

Schaltet nun der Fahrer den Verbraucher 2 ein, sinkt die Spannung der Kraftfahrzeug-Batterie 3 mit zunehmender Entladung ab. Bei Unterschreiten einer eingestellten Spannungsgrenze wird nun das Brennstoffzellenaggregat 1 aktiviert und in die Lage versetzt, elektrische Leistung abzugeben.

Das Brennstoffzellen-Aggregat 1 ist über eine Diode 5 elektrisch weich an das Bordnetz gekoppelt. Bei Einschalten des Brennstoffzellen-Aggregats baut dieses seine Spannung auf und übernimmt erst bei Überschreiten einer aktuellen Batteriespannung die Last bis zu einer maximal möglichen Leistungsabgabe.

Ist die Last des eingeschalteten Verbrauchers 2 kleiner als die maximal mögliche Brennstoffzellenaggregat-Abgabeleistung, wird gleichzeitig zur Leistungsversorgung des Verbrauchers 2 die Batterie 3 nachgeladen. Ein derartiges Nachladen der Batterie 3 ist auch dann möglich, wenn der Verbraucher 2 ausgeschaltet ist.

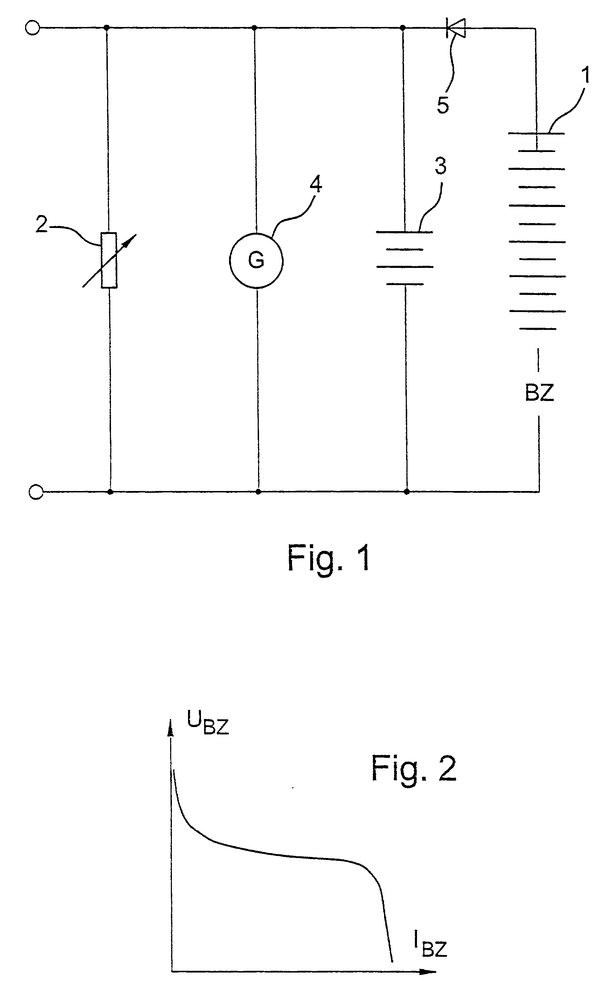

Die Aufladung der Batterie 3 durch das Brennstoffzellenaggregat 1 erfolgt gemäß der in Fig. 2 dargestellten Strom-Spannungskennlinie des Brennstoffzellenaggregats. Man erkennt, daß es zunächst zu einem relativ großen Ladestrom I_{BZ} bei relativ geringer Ladespannung U_{BZ} kommt. Gegen Ladeende der Batterie steigt die Spannung U_{BZ} aufgrund des größeren Innenwiderstandes an und der von dem Brennstoffzellenaggregat abgegebene Strom I_{BZ} wird kleiner. Um die Batterie 3 vor einem Überladungs-Schaden zu bewahren, wird das Brennstoffzellenaggregat beim Erreichen einer oberen Spannungsgrenze abgeschaltet.

Aufgrund der erfindungsgemäß möglichen Versorgung eines Verbrauchers über die Batterie 3 und/oder das Brennstoffzellenaggregat 1, bei gleichzeitig gegebener Möglichkeit der Aufladung der Batterie 3 mittels des Brennstoffzellenaggregats 1 ist es nicht notwendig, die aufgrund des Verbrauchers erforderliche Stromabnahme genau zu kennen. Das beschriebene System kann in einfacher und unaufwendiger Weise auf unbekannte bzw. variable Stromanforderungen reagieren, ohne daß die Leistung des Brennstoffzellenaggregats 1 (beispielsweise über Wasserstoff- oder Luftmassenregelung) geregelt werden müßte. Auf eine Leistungselektronik zur Steuerung des Brennstoffzellenaggregats zur Spannungsanpassung kann daher verzichtet werden.

Bevorzugte Dimensionierungen der dargestellten Schaltungsanordnung werden im folgenden beispielhaft angegeben: Bei dem Bordnetz kann es sich insbesondere um ein Nutzfahrzeug-Bordnetz mit einer Spannung von 17 bis 28 Volt handeln. Batterie 3 und Generator 4 können für einen 24 Volt-Betrieb ausgelegt sein. Unter der Annahme einer Leerlaufspannung der einzelnen Zellen des Brennstoffaggregats 1 von 1,06 Volt und einer entsprechenden Vollastspannung von 0,6 Volt ergibt sich bei 45 Zellen für das Brennstoffzellenaggregat eine Vollastspannung U_{BZ(vollast)} von 27 und eine Leerlaufspannung U_{BZ(Leerlauf)} von 48 Volt.

Es sei noch einmal darauf hingewiesen, daß der beispielhaft dargestellte Fall eines motorunabhängigen Betriebes des Brennstoffzellenaggregats 1 in analoger Weise bei laufendem Motor, d. h. gegebenenfalls mit Betrieb des Generators 4, möglich ist. Durch die Schaltungsanordnung ist auch bei laufendem Motor das Brennstoffzellenaggregat 1 in der Lage, das System Batterie-Generator optimal zu ergänzen.

Ein weiteres Kriterium für die Zuschaltung des Brennstoffzellenaggregates 1 ist die benötigte Bordnetz-Last. Insbesondere dann, wenn aus Kostengründen die Batterie 3 beziehungsweise der Generator 4 gar nicht für eine maximale Bordnetz-Last ausgelegt ist. In diesem Fall wird das Brennstoffzellenaggregat 1 bei Überschreiten einer voreinsrellbaren Bordnetz-Last aktiviert. Vorteilhafterweise entspricht diese voreinstellbare Bordnetz-Last der maximalen Bordnetz-Last bei der aktuellen Batteriespannung. Es ist jedoch auch möglich, die voreinstellbare Bordnetz-Last unabhängig von der momentanen Batteriespannung vorzugeben. Die Zuschaltung des Brennstoffzellenaggregates 1 bei Überschreiten einer voreinstellbaren Bordnetz-Last bewirkt, daß eine schnelle Entladung der Batterie 3 vermieden wird beziehungsweise daß eine ausreichende Spannungsversorgung auch bei maximaler Bordnetz-Last gewährleistet ist.

Die beiden Zuschaltkriterien voreinstellbare Batterie-Spannung und voreinstellbare Bordnetz-Last können selbstverständlich beliebig kombiniert werden. Weiterhin ist klar, daß bei Vorhandensein eines Generators 4 auch dieser zum Aufladen der Batterie 3 beitragen kann und daß dementsprechend geeignete Maßnahmen zum Schutz der Batterie 3 vor Überladung auch im Hinblick darauf getroffen werden müssen.

## Patentansprüche

1. Verfahren zur Versorgung eines eine Batterie (3), zumindest einen elektrischen Verbraucher (2) und ein parallel zur Batterie (3) angeordnetes Brennstoffzellenaggregat (1) aufweisenden Bordnetzes eines Kraftfahrzeugs mit elektrischer Energie, wobei das Brennstoffzellenaggregat (1) zumindest zeitweise zur Versorgung des Bordnetzes mit elektrischer Energie und/oder zur Aufladung der Batterie (3) eingesetzt wird, und wobei das Brennstoffzellenaggregat (1) bei Überschreiten einer voreinstellbaren Batterie-Spannungsgrenze deaktiviert wird,
**dadurch gekennzeichnet,**
**daß** das Brennstoffzellenaggregat (1) bei Überschreiten einer voreinstellbaren Bordnetz-Last aktiviert wird.

2. Verfahren nach Anspruch 1,
**dadurch gekennzeichnet,**
**daß** das Brennstoffzellenaggregat (1) zusätzlich bei Unterschreiten einer voreinstellbaren Batterie-Spannungsgrenze aktiviert wird.

3. Verfahren nach einem der Ansprüche 1 oder 2,
**dadurch gekennzeichnet,**
**daß** die voreinstellbare Bordnetz-Last der maximalen Bordnetz-Last bei der aktuellen Batteriespannung entspricht.

4. Verfahren nach einem der Ansprüche 1 oder 2,
**dadurch gekennzeichnet,**
**daß** das Brennstoffzellenaggregat (1) auch bei ausgeschaltetem Motor des Kraftfahrzeugs aktivierbar ist.

5. Verfahren nach einem der Ansprüche 1 oder 2,
**dadurch gekennzeichnet,**
**daß** das Brennstoffzellenaggregat (1) nach der Aktivierung bei konstanter Last betrieben wird.

## Claims

1. A process for supplying an electrical system of a motor vehicle having a battery (3), at least one electrical consumer (2) and a fuel cell unit (1) positioned parallel to the battery (3) with electrical power, the fuel cell unit (1) being used some times at least to supply the electrical system with electrical power and/or to charge the battery (3), and the fuel cell unit (1) being deactivated when the battery voltage level rises above a pre-set battery voltage limit,
**characterised in that**
the fuel cell unit (1) is activated when the electrical system load rises above a pre-set electrical system load.

2. A process in accordance with claim 1,
**characterised in that**
the fuel cell unit (1) is also activated when the battery voltage falls below a pre-settable battery voltage limit.

3. A process in accordance with one of claims 1 or 2,
**characterised in that**
the pre-set electrical system load corresponds to the maximum electrical system load at the current battery voltage.

4. A process in accordance with one of claims 1 or 2,
**characterised in that**
the fuel cell unit (1) can be activated when the engine of the motor vehicle is switched off.

5. A process in accordance with one of claims 1 or 2,
**characterised in that**
after activation the fuel cell unit (1) is operated at constant load.

## Revendications

1. Procédé d'alimentation en énergie électrique d'un réseau de bord d'un véhicule automobile, ledit réseau comprenant une batterie (3), au moins un dispositif consommateur électrique (2) et une unité de cellule à combustible (1) agencée en parallèle à la batterie (3), l'unité de cellule à combustible (1) étant utilisée au moins temporairement pour alimenter le réseau de bord en énergie électrique et/ou pour charger la batterie (3), et l'unité de cellule à combustible (1) étant désactivée lors du dépassement d'une limite pré-réglable de tension de batterie, **caractérisé en ce que** l'unité de cellule à combustible (1) est activée lors du dépassement d'une charge pré-réglable du réseau de bord.

2. Procédé selon la revendication 1, **caractérisé en ce que** l'unité de cellule à combustible (1) est activée en supplément lors du passage au-dessous d'une limite pré-réglable de tension de batterie.

3. Procédé selon l'une ou l'autre des revendications 1 et 2, **caractérisé en ce que** la charge pré-réglable du réseau de bord correspond à la charge maximale du réseau de bord pour la tension de batterie actuelle.

4. Procédé selon l'une ou l'autre des revendications 1 et 2, **caractérisé en ce que** l'unité de cellule à combustible (1) est susceptible d'être activée même lorsque le moteur du véhicule automobile est à l'arrêt.

5. Procédé selon l'une ou l'autre des revendications 1 et 2, **caractérisé en ce qu'**après l'activation, l'unité de cellule à combustible (1) fonctionne à charge constante.
